# EUROPEAN PATENT APPLICATION

(11) **EP 4 456 355 A1**
(43) Date of publication of application: **30.10.2024**
(21) Application number: 21968768.8
(22) Date of filing: 22.12.2021
(51) Int. Cl.: H02G 7/00, H02G 1/02

(54) **BIRD BEACON FOR POWER LINES**

(71) Applicant: Sociedad Anonima de Preformados Metalicos, 31868 Izurdiaga-Irurzun (Navarra) (ES)
(72) Inventor: JAUNSARAS MUNARRIZ, David, 31868 IZURDIAGA-IRURZUN-NAVARRA (ES)
(74) Representative: Urizar Anasagasti, Jesus Maria
(86) International application number: PCT/ES2021/070922
(87) International publication number: WO 2023/118617

(57) **Abstract**

The invention relates to a bird beacon for power lines, provided with means of illumination (3) directed longitudinally towards the conductor cable (2), focusing it longitudinally in at least one of the directions in which said cable (2) is laid from the position in which the beacon is attached to same. The body (1) of this beacon has attachment means and means for capturing energy from the conductor cable (2) to be illuminated.

## Description

### Technical field

The sector in which the invention falls is that of electrical installations, more specifically devices intended for lighting overhead, medium or high voltage power lines.

The subject matter of the invention is a beacon to illuminate power lines so that they are visible to birds, preventing them from colliding with the power conductors during flight, since the illumination of the cable in its entirety constitutes a means of modifying the flight path of birds due to the increased visibility of the conductors.

### State of the art

The main cause of unnatural mortality of birds is due to interaction with human infrastructures, including overhead electrical transport and distribution lines. These negative bird interactions occur mainly in two ways: Electrocution, which occurs mainly in the supports, when a bird simultaneously touches a live element such as the conductor and a grounded element such as the tower cross brace; and the collision of birds against conductors and/or ground cables.

Currently, existing devices for preventing bird collisions are designed to be visible during the day in good visibility situations and are generally intended to be placed on the ground wire. A classic example is the device described in document ES2048651, from the same applicant, of a beacon for cables of power lines or similar, intended to scare away birds and/or warn them of the existence of cables, which comprises a central body that can be attached to the line, from which side fins emerge, generally arranged in a vertical position, which have a colour, arrangement and configuration according to the terrain and the fauna of the area, said central body also having an interior cavity accessible from an opening that communicates with one of its faces, in order for the corresponding cable to be able to pass therethrough until it is retained in said interior cavity as if it were a clamp, for the purposes of which said central body is made of a synthetic material with some flexibility.

There are also bird protection devices that incorporate light to increase visibility in low visibility situations, but these designs can only be installed on the ground cables of overhead lines, and their installation on power conductors is not recommended because its construction materials and the incorporated electronics would degrade due to temperature and the presence of high intensity electromagnetic fields generated by the conductor itself. These devices produce sporadic illumination.

Document ES1067466, also from the applicant, describes a light beacon for aeronautical signalling of conductors on medium and high voltage lines that uses the field created by the conductor to obtain a power supply voltage for an LED lighting system which is located below the conductor, marking the position thereof at specific extension points. This device is designed for aeronautical protection through compliance with international civil aviation regulations, and therefore, it is not a design intended for bird protection.

Currently, in those areas where environmental technicians for the protection of birds require the installation of beacons for the power conductors, in addition to the ground cable, for situations of low visibility, due to the lack of technical solutions on the market, aeronautical light signalling beacons are being used, which have not been specifically designed to prevent collisions with birds, since they also illuminate specific points of the cable on which they are placed and also have a high intensity, which is why they have high light pollution.

There is no known beacon that, instead of limiting itself to illuminating the cable sporadically, illuminates it longitudinally, so that birds can see along its entire path as long as beacons are installed at a predetermined distance on said cable.

Currently, there is no product on the light beacon and bird beacon market for installation on power conductors, adapted to the vision of birds, with reduced dimensions and weight, capable of being installed automatically by a robot or machine and that takes advantage of the magnetic field generated by the conductor to power the LEDs that illuminate the cable, both with the possibility of generating conventional white light and light in the ultraviolet range.

### Description of the invention

Based on the prior art, the present invention aims to provide a bird beacon for signalling and illuminating power lines, particularly electrical conductor cables, which has the features of claim 1.

Among the technical features of the new lighting system that this beacon represents, the following are noted:
- It is a beacon specifically created to prevent birds from colliding with overhead medium or high voltage conductor cables, which has an optical system that allows the conductor cables to be marked effectively since it allows the placement spacing between beacons to be maximised, by means of linear illumination of the conductor on which the device is installed, with the aim of making it more visible and thus preventing the collision of birds.
- Optical design of longitudinal signalling of the entire cable instead of the current sporadic signalling system. This is an important innovation in the signalling concept, since, until now, the beaconing of the cables is carried out sporadically (by placing several light points distributed along the cable) and with this system a new signalling concept is pursued that is sympathetic to the vision of birds by propagating the light beam longitudinally along the cable.
- It is adapted to the vision of birds, both in visible and ultraviolet light, the latter option allowing the lines to be signalled in especially sensitive environments in which human activity may be affected by light pollution, and at the same time, maintain the effectiveness of the system.
- It has a structure with two identical casings, which are open on the face located facing the cable when mounted thereon, each of which has attachment means for attaching to the conductor cable, means for capturing energy from said conductor cable and means of illumination for the cable, such that when two casings facing each other are mounted on a conductor cable, it is illuminated in both directions from the position of the beacon.
- It integrates all the necessary elements within a single body, with reduced weight, compatible with the electrical and magnetic fields generated in the conductor cables, without degradation in its materials or components over time, due to phenomena such as the corona effect and tracking.
- Power system (Energy harvesting) using the magnetic field generated by the current circulating in the conductor cable.
- It has an attachment system for attaching to the cables that allows the installation of the beacons automatically by means of a robot, since this attachment system does not require the use of any type of screw, but rather consists of an automatic closure that withstands high slip loads.
- It is compatible with different diameters of conductor cable.

### Description of the drawings

As a complement to the description being made, and for the purpose of helping to make the features of the invention more readily understandable, the present specification is accompanied by a set of drawings which, by way of illustration and not limitation, represent the following:
- Figures 1 and 2 show a beacon attached on a cable (2) from two opposite viewing angles.

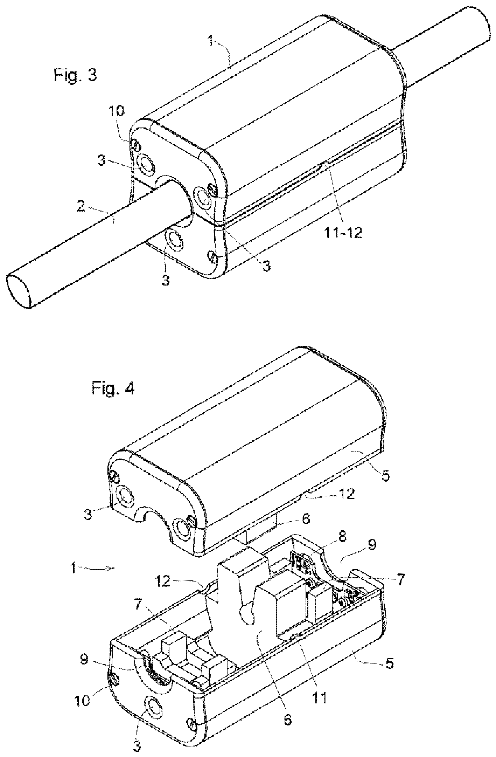

- Figures 3 and 4 represent the body (1) of the beacon attached on a cable (2) and with the two parts or casings (5) thereof separated in the mounting position.
- Figure 5 represents one of the parts of the beacon with all its components deployed.
- Figure 6 shows the two attachment means (6) for attaching on the cable (2) respectively placed attached in the casings (5).

### Embodiment of the invention

As can be seen in the referenced figures, the invention relates to a beacon for illuminating power lines, which comprises:
- Attachment means for attaching the body (1) of the beacon on a conductor cable (2).
- Means of illumination (3) for said cable (2).
- And, means for capturing energy from the conductor cable (2) to which the body (1) of the beacon is attached, for the operation of the means of illumination (3) for said cable (2).

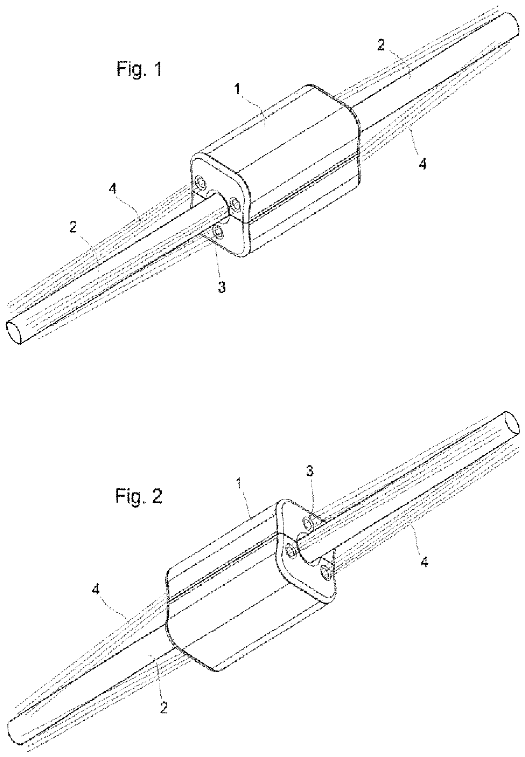

According to an important feature of the invention, said means of illumination (3) are directed longitudinally towards the conductor cable (2) on which the beacon is attached, focussing it longitudinally in at least one of the directions in which said cable (2) is laid and have a defined aperture range to maximise light on the cable (2). In Figure 1 and 2 in both directions, such that by placing beacons of this type at certain distances, the entire cable (2) is illuminated, so that the birds see their presence, preventing them from impacting or landing on it.

According to another important feature of the invention, the body (1) of the beacon is made up of two identical casings (5), open on the face located facing the cable (2) when they are mounted facing each other and attached on said cable (2). Each of said casings (5) comprises:
- attachment means (6) for attaching on the conductor cable (2),
- means (7) for capturing energy from the conductor cable (2) to which it is attached,
- at least one electronic board (8) that powers the LED-type means of illumination (3), longitudinally focussing on the cable (2) in at least one of the directions in which said cable (2) is laid, and
- guide means (9) for guiding the cable through the two casings (5) facing each other.

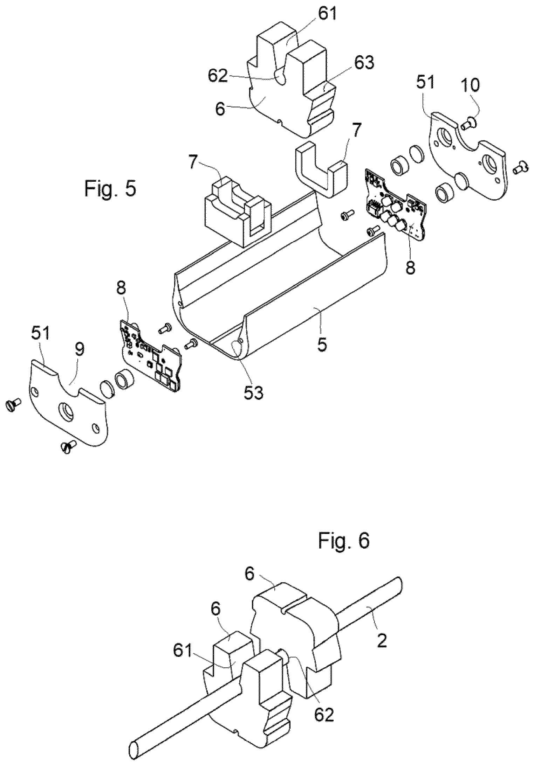

The attachment means (6) of each of the casings (5) of the body (1) consist of a block of flexible plastic material, attached in the central area of the casing (5) that forms towards the open face facing the cable (2), which has a central hole (62) with an approximate diameter or slightly smaller diameter than that of said cable (2), open towards the outside in a window (61) with a progressively increasing width towards the outside such that when the casing (5) passes over the cable (2), the window (61) channels the cable until it is retained in said central hole (62). As the casings (5) are mounted facing each other to form the body (1) of the beacon, the blocks (6) remain on the cable (2) in opposite positions, as shown in Figure 6.

As for the means of illumination for the cable (2) on which the body (1) of the beacon is attached, they are LEDs that emit white light or any colour within the visible spectrum of birds and humans. It may also be light in the range of ultraviolet (UV) rays since within this spectrum it has been observed that it is visible to birds, while it is invisible to humans, so in this case this type of beacon would not entail any type of light pollution.

These means of illumination for the cable (2) in the preferred embodiment shown in the figures are located on the two sides of the casing (5), such that when assembling two casings forming the body (1) of the beacon, the cable (2) is illuminated in both directions from the position in which said beacon is attached. In said embodiment, on one side a means of illumination (3) is located in the vertical of the cable (2), while on the opposite side two means (3) are located longitudinally aligned on each side of the cable (2); in this way, when both casings are mounted facing the cable (2), it is illuminated in each direction by three means of illumination (3) arranged radially and regularly around said cable (2) (see Figure 1 and 2).

The means for capturing energy derived from the electromagnetic field of the conductor cable (2) are constituted by at least one current transformer that is divided into two halves (7), each of which is located in each of the casings (5); in such a way that when facing each other and attaching them on the cable (2), the air gaps (7) are facing and joined together forming a transformer from which the electrical energy necessary to power one or two electronic boards (8) is obtained, which supply the means of illumination (3) focussed longitudinally on the cable (2).

The cable (2) is guided through two casings (5) facing each other due to respective semicircular windows (9), open on the sides of each of the casings (5), with the diametric cut coinciding with the open face that is located facing the cable (2), forming a circular window when the beacon is mounted thereon.

These guiding means (9) for guiding the cable through the beacon and the attachment means (6) for attaching the beacon on said cable (2) are longitudinally aligned with each other and with the cable (2).

Furthermore, each of the casings (5) comprises means to ensure relative positioning between said two casings (5) in a facing position when mounted on the cable (2). In the preferred embodiment, said means respectively consist of a projection (11) and a recess (12), homologous to each other and located in the centre of the side edges of the open face of each casing (5); such that when the two casings are facing each other, the recess (12) and the projection (11) are coupled together by tongue and groove.

The casing (5) is made of aluminium, either by moulding in a single piece, or by extruding a central profile to which two covers (51) are attached on the sides, using screws (10) (see Figure 5). It has been envisaged that the inner profile of said casing (5) has tabs (53) in which the block (6) that forms the attachment means for attaching the same on the cable (2) is retained, by means of side pins (63), thus ensuring the position thereof once said block (6) is mounted in the casing (5).

The current transformers are divided into two halves (7), such that they can be easily placed on the conductor (2) and the electronic printed circuit boards (8) are encapsulated with glass or other insulating material inside the aluminium casing (5).

Having sufficiently described the nature of the invention, as well as a preferred embodiment thereof, it is evident that the invention can have industrial applicability in the indicated sector.

Likewise, it is stated for the appropriate purposes that the materials, shape, size and arrangement of the elements described may be modified, as long as this does not imply an alteration of the essential features of the invention that are claimed below:

## Claims

1. A bird beacon for power lines, **comprising:**
- attachment means for attaching the body (1) of the beacon on a conductor cable (2),
- means of illumination (3), and
- means for capturing energy from the conductor cable (2) to which the body (1) of the beacon is attached, for the operation of the means of illumination (3) for said cable (2);
wherein said means of illumination (3) are directed longitudinally towards the cable (2) on which the beacon is attached and have a defined aperture range to maximise light on the cable (2), focussing it longitudinally in at least one of the directions in which said cable (2) is laid.

2. The beacon, according to claim 1, **characterised in that** the body (1) of the beacon is made up of two identical casings (5), open on the face located facing the cable (2) when they are mounted facing each other and attached on said cable (2), each of said casings (5) comprising:
- attachment means (6) for attaching on the conductor cable (2),
- means (7) for capturing energy from the conductor cable (2) to which it is attached,
- at least one electronic board (8) that powers the means of illumination (3), longitudinally focussing on the cable (2) in at least one of the directions in which said cable (2) is laid, and
- guide means (9) for guiding the cable through the two casings (5) mounted facing each other.

3. The beacon, according to claim 2, **characterised** because each of the casings (5) further comprises means (11, 12) for ensuring the relative positioning between said two casings (5) in a facing position when mounted on the cable (2).

4. The beacon, according to any of the preceding claims, **characterised in that** the attachment means (6) of each of the casings (5) of the body (1) comprise a block attached in the central area of the casing (5) that forms, towards the open face facing the cable (2), a central hole (62) with an approximate diameter or slightly smaller diameter than that of said cable (2), open towards the outside in a window (61) with a progressively increasing width towards the outside such that when assembling the beacon it can pass over the cable (2) until it is retained in said central hole (62).

5. The beacon, according to any of the preceding claims, **characterised in that** the means of illumination for the cable (2) on which it is attached are LEDs that emit white light or any colour within the visible spectrum of birds and humans and/or light in the range of ultraviolet (UV) rays within the spectrum visible only to birds.

6. The beacon, according to any of the preceding claims, **characterised in that** the means of illumination for the cable (2) on which it is attached, focusing it longitudinally in at least one of the directions in which said cable (2) is laid, are located on at least one of the sides of the casing (5) directed on the cable (2), and have a defined aperture range to maximise light on the cable (2).

7. The beacon, according to claim 6, **characterised in that** each casing (5) has at least one means of illumination (3) on both sides, illuminating the cable (2) in both directions from the position of the body (1) of the beacon.

8. The beacon, according to claims 6 to 7, **characterised in that** each casing (5) has one means of illumination (3) on one side and two on the opposite side, such that when the body (1) is assembled with the two casings facing the cable (2) it is illuminated in each direction by three means of illumination (3).

9. The beacon, according to claim 8, **characterised in that** the three means of illumination (3) focussed on the cable (2) in each direction in which it is laid from the position of a beacon are arranged radially and regularly around said cable (2).

10. The beacon, according to any of the preceding claims, **characterised in that** the means for capturing energy derived from the electromagnetic field of the conductor cable (2) consist of a current transformer that is divided into two halves (7), each of which is located in each of the casings (5 ), in such a way that when facing each other and attaching them on the cable (2) they are facing each other and joined together in order to obtain from said transformer the electrical energy necessary to power one or more electronic board(s) (8) that powers the means of illumination (3) focussed longitudinally on the cable (2).

11. The beacon, according to any of the preceding claims, **characterised in that** the guiding means (9) for guiding the cable through two casings (5) facing each other consist of respective semicircular windows (9) open on the sides of each of the casings (5), with the diametric cut coinciding with the open face that is located facing the cable (2), forming a circular window between both casings (5) when the beacon is mounted thereon.

12. The beacon, according to any of the preceding claims, **characterised in that** the guiding means (9) for guiding the cable through the beacon and the attachment means (6) for attaching the beacon on said cable (2) are aligned longitudinally.

13. The beacon, according to claim 2, **characterised in that** the means to ensure the relative positioning between said two casings (5), in a facing position when mounted on the cable (2), respectively consist of a projection (11) and a recess (12), homologous to each other and located in the centre of the lateral edges of the open face of each casing (5) such that when two casings are facing each other, the recess (12) and the projection (11) are coupled together by tongue and groove.

14. The beacon, according to any of the preceding claims, **characterised in that** the inner profile of each casing (5) has tabs (53) for retaining the block (6) that forms the attachment means for attaching on the cable, by means of side pins (63) corresponding to said block (6).

15. A method for placing the beacon of the preceding claims, **characterised in that** it is carried out automatically by a robot or machine that moves along the cable (2).
